# EUROPEAN PATENT SPECIFICATION

(11) **EP 0 808 488 B1**
(45) Date of publication and mention of the grant of the patent: **07.08.2002**
(21) Application number: 96902574.1
(22) Date of filing: 07.02.1996
(51) Int. Cl.: G06F 11/30

(54) **ARRANGEMENT AND METHOD IN COMMUNICATIONS MANAGEMENT AND A TELECOMMUNICATIONS SYSTEM WITH A MANAGING ARRANGEMENT**
KOMMUNIKATIONSMANAGEMENT-VORRICHTUNG UND -VERFAHREN UND TELEKOMMUNIKATIONSSYSTEM MIT EINER MANAGEMENTVORRICHTUNG
PROCEDE ET AGENCEMENT DE GESTION DE COMMUNICATIONS ET SYSTEME DE TELECOMMUNICATIONS AVEC UN AGENCEMENT DE GESTION

(30) Priority: 08.02.1995 SE 9500442
(43) Date of publication of application: 26.11.1997
(73) Proprietor: TELEFONAKTIEBOLAGET LM ERICSSON, 126 25 Stockholm (SE)
(72) Inventor: ISRAELSSON, Per, S-183 67 Täby (SE); ANDERSSON, Kjell, S-164 43 Stockholm (SE)
(74) Representative: Cederbom, Hans Erik August
(86) International application number: SE9600148
(87) International publication number: WO9624899

(56) References cited:
- WO-A-94/06232
- JP-A- 5 114 942
- US-A- 5 305 454

## Description

### FIELD OF THE INVENTION

The present invention relates to an arrangement and a method in communications management as referred to in the precharacterizing portions of claims 1 and 25 respectively.

Generally in systems, wherein one system is managed by another system or systems, herein referred to as managed systems and managing systems respectively, the managing system is provided with information on changes, states etc in the managed system.

The provision of information comprises a function which often is referred to as sending of notifications. This gives rise to sending of event reports to the managing system. If this function is applied, notifications are generated upon changes in e.g. a resource of a managed system and forwarded to the managing system.

The invention also relates to a telecommunications system as in the precharacterizing part of claim 20, comprising managing systems and managed systems wherein information on changes, states etc can be provided to a managing system which manages(s) at least one managed system.

### STATE OF THE ART

The CCITT Recommendations No M.3010 describes the principles for a telecommunications management network generally denoted TMN.

This is an international standard on managing telecommunications networks in a uniform way from a network of operations systems.

However a telecommunications management network may at the lowest level relate to a connection between an operations system and a network element but it may also relate to a whole network of operations systems controlling a large telecommunications network. An operator interface denoted Q3 has been standardized for a telecommunications system providing the connection between managing and managed systems. In the recommendations relating to the GSM Standard (Global System for Mobile Communications) subscriber administration is defined in the GSM Technical Specifications TS 12.02. According thereto the Q3 operator interface is specified for the provision of the subscriber administration functionality. The Q3 interface defines both the object oriented information model of so called network elements and the communication protocol between the so called operations systems and the networks elements. In the CCITT Recommendation No M.3010 a network element function block is defined as a functional block communicating with the telecommunications management network TMN (for the purpose of being monitored and/or controlled). The network element function block provides the telecommunications and support functions which are required by the telecommunications network that is managed. It comprises the telecommunications functions which are the subject of management.

The functions as such are not part of the TMN but they are represented to the TMN by the network element function block. The part of the network element function block that provides this representation in support of the TMN is part of the TMN itself whereas the telecommunications functions are outside the telecommunications management network.

Furthermore an operations systems function block is defined as processing the information that is related to the telecommunications management for the purpose of monitoring/coordinating and/or controlling telecommunication functions including management functions.

In "Practical Guide for OSI Management" by T Jeffree et al., February 1992 is described how managed objects comprised by a managed system emit notifications upon the occurrence of various events. The parameters comprised by the notifications and the events that provide the generation are specified in the definition of the relevant managed object. Notifications are both generically defined in the functions standards and specified in detail in DMI, i.e. CCITT (now ITU-T) Rec. X.721, "Definition of Management Information" but they may also be defined or specially adapted by the definers of managed objects. Notifications may e.g. relate to managed object creation and deletion, change of state, general attribute change, alarm reports etc. The document is further concerned with the degree of control of the manager or the managing system of the forwarding process. For example the definer of a managed object may want to define notifications which should not be sent under normal circumstances but which should be available for particular purposes such as monitoring etc. This would assume that-the transmission of event reports of different kinds could be switched on or switched off. However, this depends on the power of discrimination of the target system which is not known by the managed object definer which in turn leads to that it might not be possible to switch the notifications on and off in a desired manner which might even prevent controlling in general. In the document it is mentioned that it would be possible to define additional attributes which would serve as on-off switches for notifications which however is dismissed as a bad solution since it leads to duplication of the function of the discriminator. For explanation, a network element can inform an operations system about changes in a managed object by sending a notification to a discriminator which is placed within the network element. In the discriminator the operator can make a filtering on which events he wants to see.

The discriminator sends an-event on the (Q3) interface to the operations system if the filter detects notifications which fit to the map of the filter. The purpose of the discriminator is thus to provide a means for controlling the load on the interface (Q3).

The above mentioned document further suggests the placing of notifications in a separate managed object which might be contained in the first one but also this solution is dismissed as not satisfactory since it needs a lot of specification and additional conformance requirements and furthermore also appears to duplicate the function of the discriminator as referred to in relation to the first mentioned approach.

A managed object (MO) is an object which is visible by an operator and is defined by the Guidelines for the Definition of Managed Objects (GDMO), CCITT, now ITU-T, Rec. X.722. These guidelines defines the object type with its attribute, actions and notifications by using packages. Some of the packages are optional whereas others are mandatory. All the attributes are defined by an ASN.1 syntax and through the Q3 interface it is possible for the operator to e.g. create a managed object instance, set a value in a managed object instance, get a value from a managed object instance, do an action on a managed object instance and to delete a managed object instance.

According to the GSM Recommendations, Technical Specification 12.02 notifications are optional packages. This means here that the option as such is present merely upon on the design stage.

If thus the optional packages notifications are included, the notifications will always be active, i.e. if the function notifications is implemented; notifications are always sent and the discriminator of the network element has the function of a filter and provides the possibility to select which notifications are desired and it also provides means for ignoring notifications.

This however gives rise to a considerable load on the managed system. If for example there is a high number of registers and subscribers in a Home Location Register (HLR), a very high number of notifications will be sent e.g. concerning attribute changes from the traffic etc. Then the background load will be very high whether a manager for a managing system uses the information or not. Then the required processing capacity may be very high.

### SUMMARY OF THE INVENTION

It is an object of the present invention as defined by the independent claims to provide an arrangement comprising at least one managed system through which it is possible to control the sending of notifications within the managed system. It is particularly an object of the present invention to reduce the internal background load within the managed system and to just transmit those events which really are wanted by a managing system under the prevailing circumstances.

A particular object of the present invention is to provide an arrangement through which the emission or generation of notifications can be controlled. Furthermore it is a particular object of the invention to provide an arrangement wherein the generation or emission of notifications can be operator controlled. Another particular object is to provide an arrangement through which the sending of events can be controlled without imposing any extra functions on the discriminator and wherein both the load on the interface between a managed and a managing system as well as within a managed system can be controlled.

It is also an object of the present invention to provide a method for providing a managing system with information on a managed system which is managed thereby wherein the load both on the interface connecting the systems as well as the load within the managed system can be kept at a low level by just emitting the notifications which are needed or wanted.

The problematics of the generation of the high load within a managed system has not been addressed in the known documents but merely the load on the interface between the managing system and a managed system. Even if it is possible to impose a further function on the discriminator this does not contribute in reducing the internal load in a managed system which causes problems for example in telecommunications applications with a high degree of mobility but also under other circumstances.

However the problems with a high load within a managed system has not further been attended to since they have not been observed.

Is also an object of the invention to provide an arrangement through which the internal emission of notifications can be completely turned off or reduced to any desired degree or that only notifications relating to certain given events shall be emitted etc.

A further object of the invention is to provide a telecommunications system comprising managed systems being managed by managing systems wherein the internal load due to the issuing of notifications within the managed systems can be controlled externally and adapted to the prevailing circumstances, the number of users, e.g. subscribers, the degree of mobility etc.

Therefore an arrangement as initially referred to is provided which comprises notification controlling means for selectively controlling the generation and/or distribution of notifications internally within the managed system. The notification controlling means prevents notifications which are not to be communicated to the managing system in the form of event reports from being generated and/or emitted by the managed object (MO) and/or the resource object (RO) respectively to the event forwarding discriminator means (EFD/LOG).

A system and a method as initially referred to are also provided having the characterizing features of claims 20 and 25 respectively.

Particularly it is through said means possible to prevent the emission of notifications to any desired degree, including complete prevention, or merely to allow only given kinds of notifications to be emitted depending on system, circumstances etc.

It is an advantage of the invention that the emission of notifications can be turn on and turn off depending on the load conditions in a managed system but that they still may be turned on if the operator for one reason or another is interested in particular notifications etc. A further advantage of the invention is that the function of sending notifications can be implemented but also controlled relating to the load both on the interface between a managed system and a managing system and internally in the managed system. In a particular embodiment of the invention it is referred to a telecommunications management network wherein the managing systems are so called operations systems and the managed systems are so called network elements wherein communication between the systems is provided by the Q3 interface or similar. The managed systems or the network elements then comprise a number of managed objects which represent different kinds of resources. Then, advantageously, if a system handles merely a few managed objects, it provides for allowing notifications being sent at any time but when the number of users increases, then the system load also increases and when the sending of notifications reaches a given level, the notification function can either be completely or partly turn off. The invention also covers the case relating to subordinate managed objects being managed by superior managed objects in which case the superior managed objects takes the place of a managing system.

### BRIEF DESCRIPTION OF THE DRAWINGS

The invention will in the following be further described in a non-limiting way under reference to the accompanying drawings in which:
- Fig 1: schematically describes a network element and an operations system,
- Fig 2: schematically illustrates managed objects of a network element representing resource objects or other managed objects,
- Fig 3: schematically illustrates notification distribution in a managed system and transfer of information a to managing system,
- Fig 4: very schematically illustrates sending of notifications within a managed system comprising a number of MO:s and EFD:s/LOG:s,
- Fig 5: very schematically illustrates a telecommunication system,
- Fig 6: illustrates an embodiment wherein all objects are placed within the same process,
- Fig 7: illustrates an embodiment wherein objects are placed in different processes,
- Fig 8: illustrates an embodiment wherein objects are placed in different processes placed in different processors,
- Fig 9: illustrates a particular embodiment wherein actions are used for controlling notifications,
- Fig 10a: illustrates a further embodiment using a main MO for controlling notifications, and
- Fig 10b: illustrates a further alternative based on the use of a main MO.

### DETAILED DESCRIPTION OF THE INVENTION

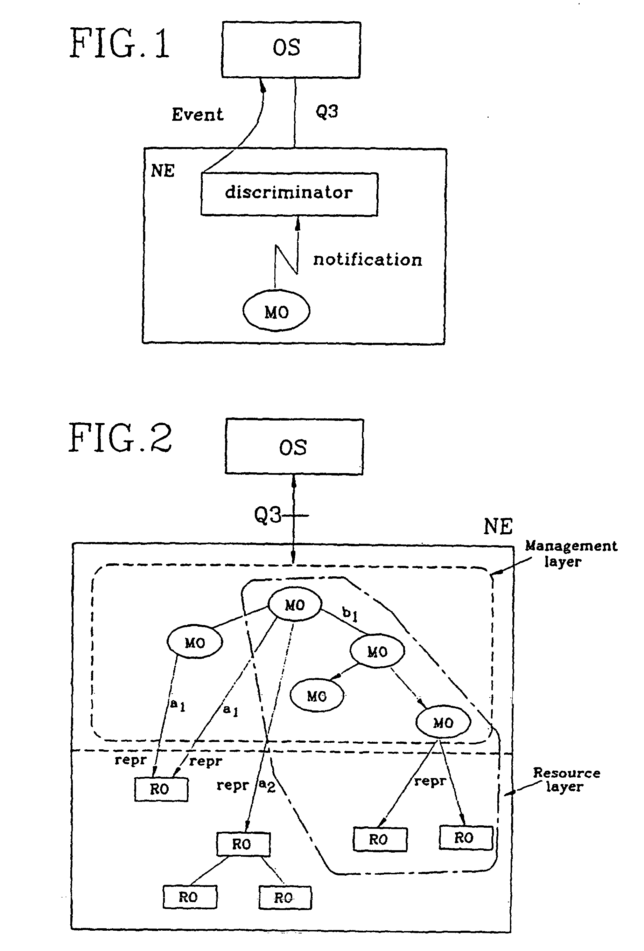

Fig 1 illustrates a managed system comprising a network element NE which is managed by an operations system OS representing a managing system. The network element NE comprises a managed object MO. In order to inform the operator side, i.e. the operations system OS about changes in the managed objects MO notifications are sent. A notification is sent by the managed object MO to a discriminator which is arranged within the network element NE. In systems known today it is possible for the operator to make a filtering in the discriminator to select the events which are considered as interesting. For example a notification can be sent for reasons such as attribute changes, state changes, creation and deletion of managed objects instances etc. The filter of the discriminator comprises a so called filter map and if the filter establishes that a particular notification fits to the filter map, the discriminator sends an event on the interface, in this particular embodiment on the Q3 interface to the operations system OS. Thus it is possible to control the load on the Q3 interface but the load created within the network element NE can be very high. If for example there is a high number of changes in a managed object MO, every change will lead to the sending of a notification which not only gives a very high number of notifications which are sent but also gives a high background load even if the operator has switched off the discriminator through setting appropriate filter parameters.

Therefore the emission of notifications will be stopped at an earlier stage according to the invention. In the following (to illustrate the importance of controlling the emission of notifications) an example will be given from a telecommunications system in which the number of active subscribers are 40%. Active in this case means that a mobile station is switched on and a SIM (Subscriber Identity Module) card is installed. It is supposed that the location updating i.e. a new location area is 0.1/h per active subscriber. This would generate 0.4 x 0.1 x 100.000 = 4.000 notifications per 100.000 registered subscribers in a home location register and hour. For subscriber services the estimated load is 0.05 per No./h/subscriber. This means that 5.000 notifications per 100.000 registered subscribers in the home location register and hour will be sent. According to this estimation about 9.000 notifications concerning attribute changes from the traffic per hour and 100.000 subscribers will be generated from the network element which gives a high background load even if the information is not used by the managing system.

This however merely was given as an example relating to one system in order to illustrate the processing capacity needed when only the transmission of event reports can be controlled but not the sending of notifications within a network element.

Below the invention will be further described under reference to the telecommunications management network TMN as defined in CCITT (ITU-T) recommendations M.3010 and relating to the GSM system.

The invention is however not limited to the GSM system or to TMN but on the contrary it is relevant to all systems or arrangements wherein notifications are sent for information purposes.

Relating to the GSM system, subscriber administration is defined in the GSM Technical Specifications TS 12.02 wherein the Q3 operator interface as standardized by the TMN is specified to provide the subscriber administration functionality.

Fig. 2 illustrates a managed system in the form of a network element NE which is managed by a managing system in the form of an operations system OS. The communication between the operations system OS and the network element NE takes place over the Q3 interface which comprises a communication protocol between the systems. The network element as illustrated herein is divided into a management layer and a resource layer. The management layer comprises a number of managed objects MO which are monitored and controlled from the operations system OS. The resource layer comprises a number of resource objects RO represented by the managed objects MO of the management layer.

The resource objects and the resources may comprise functional resources, logical resources or physical resources. A resource may e.g. be an internal resource in an MO or it may comprise an RO. Particularly, a notification may be generated in an MO, but it may also be generated in an RO.

For example, one managed system may comprise notifications generated internally in an MO or in an RO or in both.

Notifications may also be generated in other ways, e.g. depending on system etc. The invention is further not limited to object-oriented structures. In the shown embodiment a MO is defined by a GDMO which relates to the Guidelines for the Definition of Managed Objects. The GDMO defines the object type with its attributes, actions and notifications by using packages. Some of the packages are optional whereas others are mandatory. All attributes are defined by an ASN.1 syntax. Through the Q3 interface an operator can for example create an MO instance, set a value in an MO instance, get a value from an MO instance, do an action on an MO instance and delete an MO instance.

The resources or the resource objects RO in the network element NE are used by the traffic handling. For example, a resource (a logical resource) representing a trunk can be used to carry a telephone call in one direction. Since only the management layer of the NE appears to the OS, a trunk must be represented by a MO in order to be manageable from the OS. The MO then acts as an interface towards the OS. A managed object can not store any data but all data belongs to the resources. There can be a one to one mapping between managed objects and resources or resource objects but this is not necessarily the case. The arrows a₁, a₂ illustrate different management views of a resource object whereas the arrow b₁ illustrates one MO representing a combination of resources. Within the dashed-dotted line in Fig 2 is illustrated how a managed object may represent other managed objects. In this case the operations support function can be implemented in the highest managed object instead of in an operations system, i.e. in this case the highest managed objects can be said to form an operations system which also is covered by the present invention. This figure merely is intended to illustrate different aspects or forms of managed systems (particularly network elements) to which (among others) the invention applies.

As referred to above, the data of a MO may be specified as attributes. A MO attribute may correspond to a persistently stored attribute of a resource or an RO. Furthermore it may be calculated in an algorithm that fetches attributes from a number of resources or ROs. Furthermore resource data may be stored in a file system or in hardware registers.

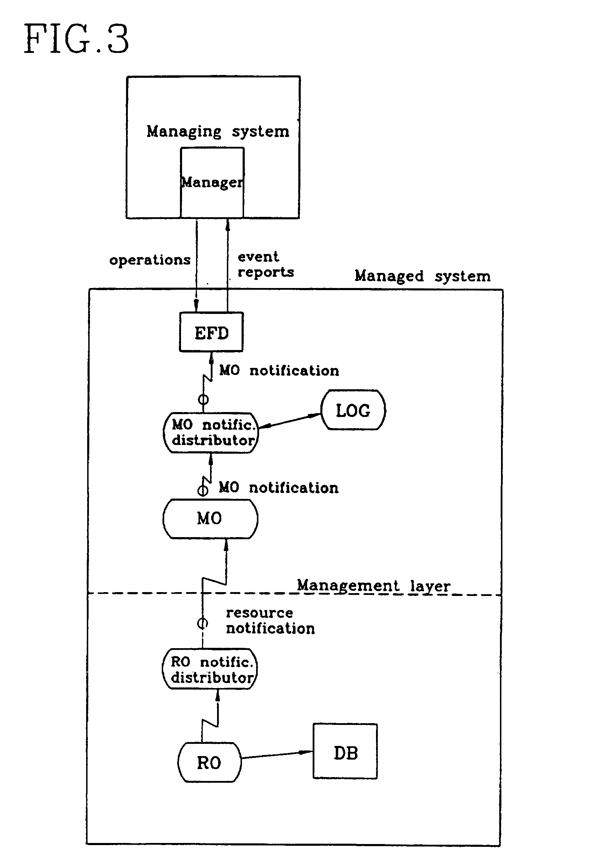

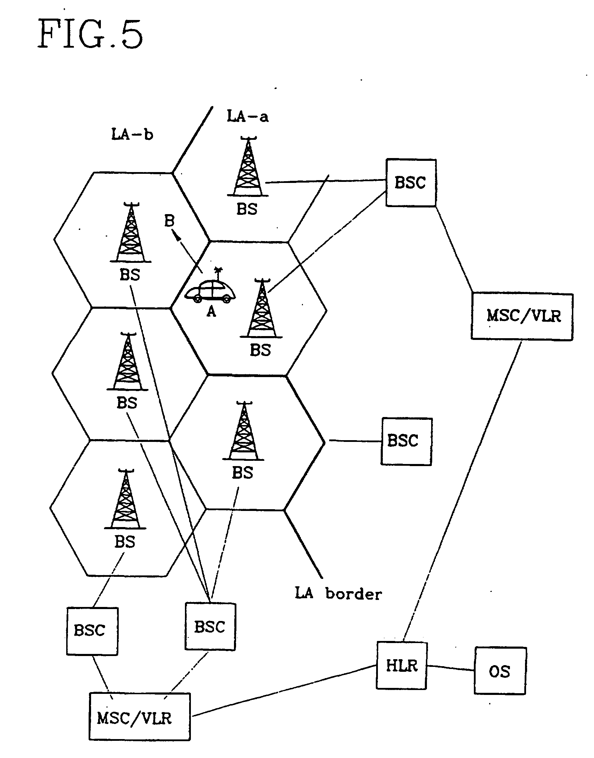

In Fig 3 is illustrated the sending of notifications. In order to inform the managing system (for example OS) about changes in a MO in a managed system (e.g. NE) representing a RO a notification can be sent to a discriminator EFD (or to an agent) which then sends an event report to the manager of the OS on the Q3 interface. Notifications.can also be sent to a LOG which will be further explained later on. A notification may for example be an alarm condition, changing data and traffic statistics. As referred to above, when mobility is provided, the number of notifications that may be sent is very high which will be further discussed in relation to Fig 5.

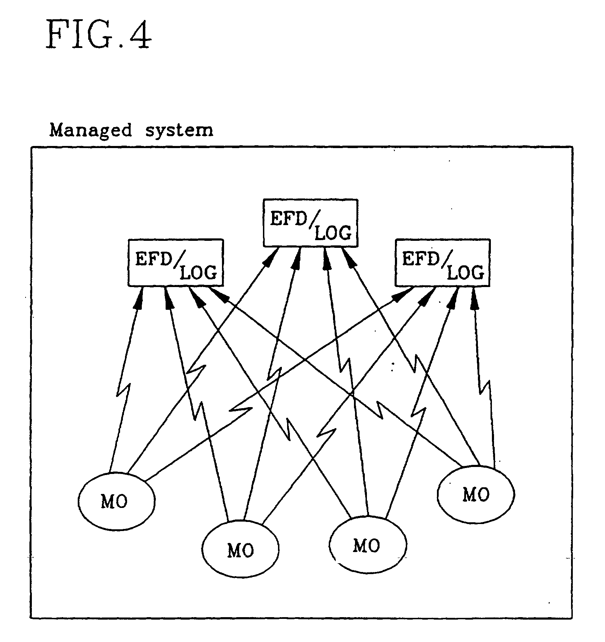

In Fig 4 is illustrated in a schematical manner, a managed system comprising a number of Event Forwarding Discriminators EFD or LOG:s. Generally every notification generated in an MO must be sent to every EFD (or LOG) which creates a high load. This illustrates well one of the reasons for it being desirable to be able to control generation/sending of notifications.

According to GSM TS12.02 notifications are optional packages, the option in this case merely being present during the time of design. This means that if optional packages are included, the notifications will always be active. Through the definition of an additional attribute notifications per attribute of the managed object can be turned off/on per attribute. This additional attribute is defined in a GDMO specification with the use of ASN.1 notations. This additional attribute comprises the notification controlling means and prevents notifications from being sent in case the notification is not desired or needed or when it should be stopped.

Resource notifications are generated spontaneously by the resources when certain events occur in the NE. The managed objects or the resource objects then send the notifications to a notification distributor. Generally there is one notification distributor in each processor but the invention is not limited thereto. If the notifications are generated in RO:s the resource notification distributor forwards the notifications received by it to the management layer in which they are translated to MO notifications unless they are prevented from being generated in the RO, or from being sent away. When a notification is not prevented from being generated or sent as a MO notification to the MO distributor by the additional attribute, it is forwarded to the OS, or to the unit that subscribes to the MO notification.

The event forwarding discriminator object EFD is created for the subscription to MO notifications. The EFD as such is an MO which determines which MO notifications are to be forwarded as event reports to the operations system.

LOG in the figures relate to a managed object class in which notifications may be stored for later retrieval from e.g. the Q3-interface. In the LOG the notifications are stored in the form of LOG records, e.g. an alarm notification will cause an alarm record to be created. For each LOG there is a filter which defines which notifications will be stored as LOG records in that particular LOG instance.

Thus an MO notification may either go to an EFD or to a LOG. If the notification has to be forwarded to the managing system formed by the OS, it is sent as an event report by the managed system, in this case the NE, to the manager of the managing system or in this case the OS.

However, in order to reduce the load internally within the managed system the additional attribute prevents notifications from being sent from the MO or the RO depending on where they are generated. This depends, as referred to above, among others on used system, needs etc. In a particular embodiment notifications may be generated in a RO, but prevented from being sent out from the MO representing said RO. This additional attribute will now be further explained using the guidelines for the definition of managed objects GDMO according to which packages are used for the definition of the object type with its attributes, actions and notifications. For the purpose a notification stop package is introduced. The package is defined as
notificationStopPackage PACKAGE
   ATTRIBUTES
   notificationStop GET-REPLACE
   DEFAULT VALUE <module-name>.notstopdef;
   BEHAVIOUR notificationStopPackage
BEHAVIOUR DEFINED AS "This package is used in managed object classes to prevent notifications from being emitted. It may or may not be a conditional package of a managed object. The ASN.1 syntax of the value-reference of the default value notstopdef is an empty set, meaning that if no information is given by object creation no notification will be stopped. The registration is unspecified and depending on the specification where the package is defined.";
REGISTERED AS (unspecified)
   The notifications stop attribute is defined as notificationStop
   ATTRIBUTE
   WITH ATTRIBUTE SYNTAX <module-name> notstop
   MATCHES FOR EQUALITY
BEHAVIOUR notification stop BEHAVIOUR DEFINED AS "This attribute can prevent a notification to be emitted from a managed object internally in the system in order to reduce the processing requirements of a system. The processing requirements are reduced by: 1, notification do not require processing capacity to be transferred from the emitting managed object in one part of the system to the discriminators of events forwarding discriminators and logs in possibly other parts of the system 2, no processing capacity is required to make any testing against the definitions of discriminators. The ASN.1 type of the attribute is a set of OIDs (Object Identifiers) that identifies notifications that shall not be issued. Optionally, if the notification is a result of an attribute value change or a state change the attributeId's of the attributes for which notifications still shall be emitted are included. If no attributes are indicated all notifications are stopped. The module-name is depending on the, specification where the ASN.1 syntax is defined. The registration is unspecified and depending on the specification where the attribute is defined";
   REGISTERED AS (unspecified)

The ASN.1 definition is as follows:

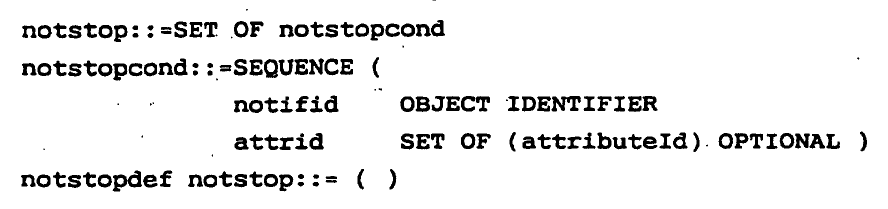

The invention will now be illustrated in relation to one particular embodiment relating to the GSM system. Fig 5 very schematically illustrates a cellular mobile communication system, here the GSM system. A first and a second location area LAₐ, LA_{b} each comprising a number of cells are illustrated. Each cell comprises a base station BS with a radio transceiver system (not illustrated here) which is in communication with a base station controller BSC which in turn communicate with a mobile switching center/visitor location register MSC/VLR. The two MSC/VLRs of the figure communicate with a home location register HLR which is controlled by an operations system OS. When the mobile station MS moves from A to B it will change location area LA which will be registered in the home location register HLR. If it for example frequently changes location area LA and/or when there are many mobile stations MS changing location area, many changes will be registered in the HLR and thus a lot of notifications will be created although not all of them have to be transmitted to the OS as event reports.

The use of the invention in GSM managed object class subscriber in HLR will now be further described. As referred to above, the additional attribute is here used for preventing subscriber induced notifications in the GSM system but of course in mobile telecommunications systems in general.

The attribute value change notification is used to indicate that an attribute of a managed object has changed its value. This attribute gives notice of any change in any attribute of a managed object. Therefore it also creates a large processing load if there are many attributes constantly changing values, e.g. from a subscriber originated action in a mobile telephone system as referred to above. Through the notification stop attribute of the notificationStopPackage it is possible to point out for which attributes a notification is not to be issued. The GSM specified MO subscriber in HLR contains an attribute value change notification and the attributes of the MSC/VLR number will continuously be changed as a consequence of the roaming subscribers in the system as discussed in relation to Fig 4 above.

An example of the notificationStopPackage can be as follows:
subscriberInHlr MANAGED OBJECT CLASS
   DERIVED FROM "CCITT X.721":top;
   CHARACTERIZED BY subscriberInHlrPackage;
   CONDITIONAL PACKAGES
subInHlrControlStatusPackage
   PRESENT IF "controlStatus is implemented",
prevMsisdnPackage PRESENT IF "the association to the previous MSISDN is implemented",
subInHlrOverridePackage PRESENT IF
   "Override Category is implemented",
subInHlrLmsiPackage PRESENT IF
   "LMSI is stored in HLR",
subInHlrMwdPackage PRESENT IF
   "Message Waiting Data is implemented in HLR",
createDeleteNotificationPackage PRESENT IF
   "the objectCreation and objectDeletion notifications (as defined in CCITT X.721) are supported by this managed object",
attributeValueChangeNotificationPackage PRESENT IF
   "the attribute ValueChange notification (as defined in CCITT X.721) is supported by this managed object",
stateChangeNotificationPackage PRESENT IF
   "the stateChange notification (as defined in CCITT X.721) is supported by this managed object",
NotificationStopPackage PRESENT IF "the managed object shall be conditionally inhibited to emit notifications for further processing in the system.";
REGISTERED AS (gsm-12.02-objectClass);

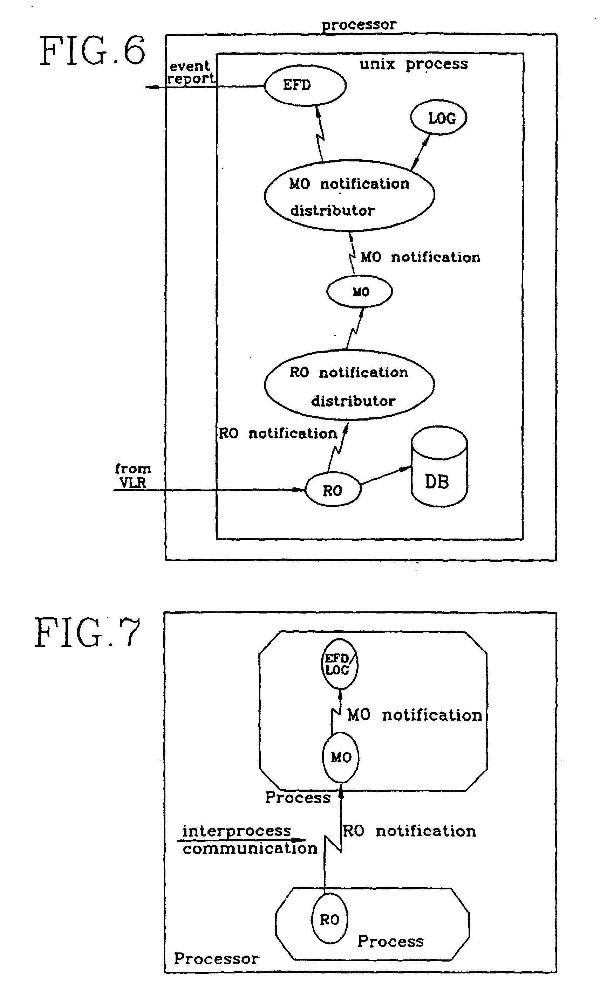

In Fig 6 a particular embodiment is illustrated wherein e.g. a home location register HLR comprises but one processor. In the embodiments illustrated in Figs 6-10b it is supposed that notifications are generated by resource objects. However, as discussed in the foregoing, the notifications may also be generated in the managed objects (or in other ways), and the embodiments as illustrated in Figs 6-10b of course also apply thereto. It does of course not have to relate to a HLR, the example merely intends to illustrate an example in which all objects are placed within the same process (UNIX process). In this case the communication between objects could be efficient.

However, communication will always require capacity, messages are sent and received. Due to e.g. a change of location area a resource object RO of a UNIX process in the HLR receives information from a visitor location register VLR. The RO, unless prevented by the additional attribute, sends a communication to the database DB and it also sends a RO notification to the RO notification distributor which may send a RO notification to the managed object MO. Then an MO notification is sent to the MO notification distributor and the MO notification is sent on to the agent in case so provided for by the EDF as referred to above. The agent then sends an event report to the operations system OS.

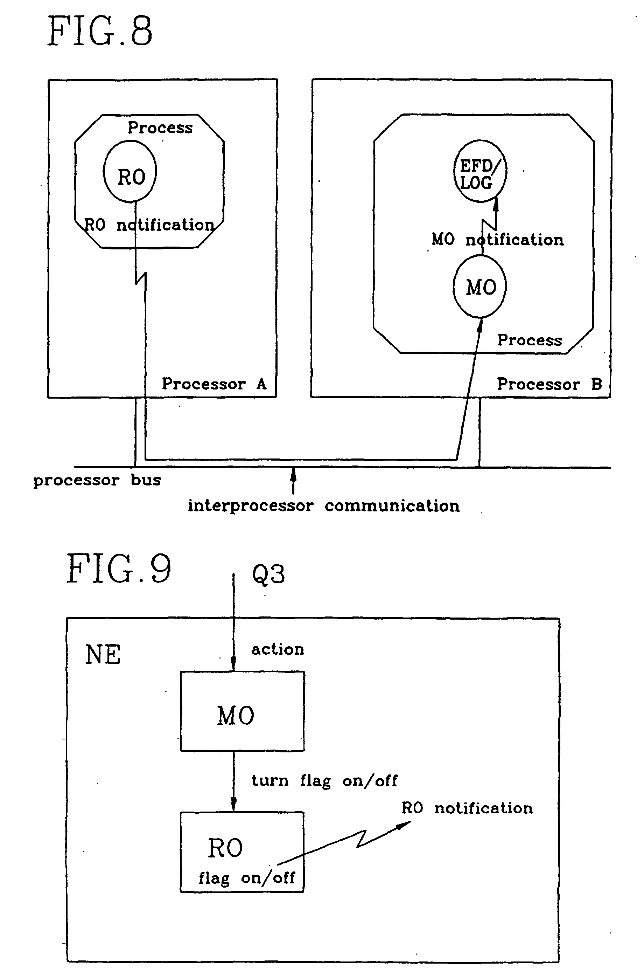

In another embodiment of the invention as schematically illustrated in Fig 7 different objects are placed in two different processes. The number two is here of course merely given as an example, it could be more as well. Then an addressing mechanism has to be added to the message and the message must add an addressing information. In still another embodiment schematically illustrated in Fig 8 different objects are placed in different processors A, B. The interprocessor communication is provided by a processor bus. A message must then have an address pointing out how to find the right processor. For example a processor A e.g. of a HLR may receive information from e.g. a VLR about a change. The resource object RO of the processor A may then send an RO notification to an RO notification distributor (not shown) of processor A which then communicates this to a managed object of the processor B. This in turn emits a MO notification to the MO notification distributor of processor B which then may send an event report to an operations system in the same manner as discussed in the foregoing. If a notification is stopped, no RO notification is emitted. The application of the invention on multi-processor systems or systems with distributed processors is particularly advantageous since a reduction in load is of the utmost importance since the created load is considerably higher than in a single processor system.

The embodiments as discussed in relation to Figs 6,7 and 8 of course do not only relate to processors of a home location register but to processors in any managed system and the value changes of attributes of a managed object of course do not have to relate to changes of location areas provided by VLRs etc. but the invention is applicable to all kinds of systems wherein a managed system is managed by a managing system.

The invention also relates to the case when a subordinate managed object is controlled by a superior managed object which then takes the place of a managing system or an operations system.

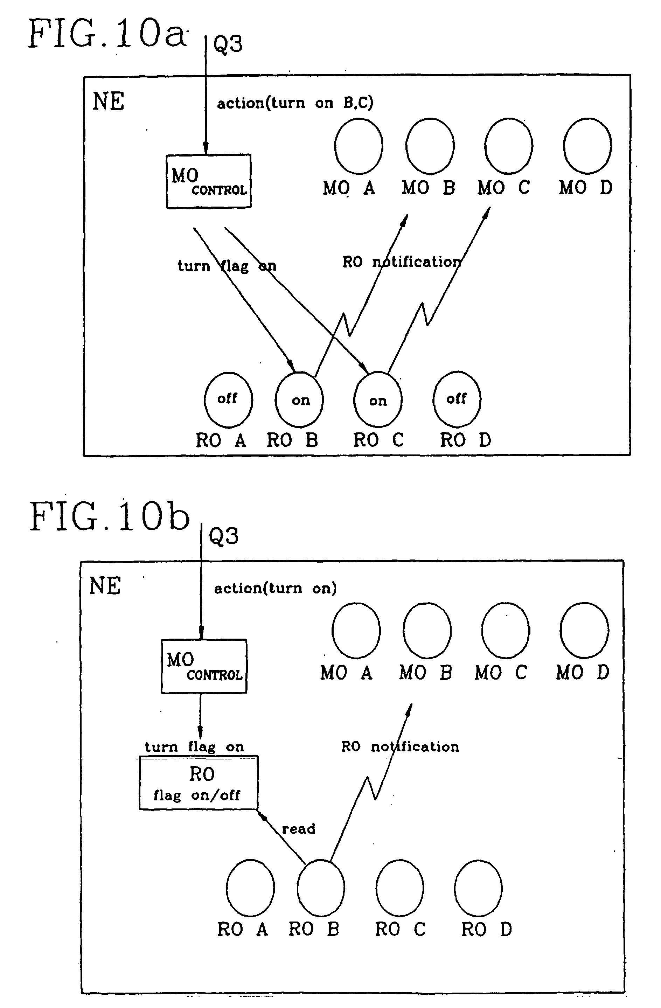

In the following some further embodiments of the invention will be briefly described under reference to Figs 9 and 10a, 10b. Of course also these embodiments are applicable independently of whether all objects are comprised in one process or if they are in different processes in one and the same processor or even in different processors.

The principles as schematically referred to in Fig 3 are relevant in respect of these embodiments as well as the ones referred to in the foregoing.

Fig 9 schematically illustrates a way to selectively control notifications using actions instead of attributes. An action is then added per MO. By calling the action a flag is turned on/off in the RO. This flag prohibits the RO from sending out an RO notification. By calling this action again, the RO notification can be turned on again.

In general the use of an action is based on the same principles as the use of an attribute and the embodiment is of course also applicable when notifications are generated in managed objects.

According to another embodiment of the invention a notification controlling Managed Object MO_{control} is introduced. A MO_{control} comprises an attribute/action that turns on/off an RO notification (or an MO notification). The amount of CMIP (Common Management Information Protocol) operations may then be reduced.

Only one MO instance has to be created. The attribute/action specifies which MO's that should be allowed to or prohibited from sending out an RO notification. Alternatively a specific MO instance might be pointed out for turning the RO notification on/off (or an MO notification if notifications are generated in managed objects).

This embodiment can be carried out in essentially two ways of which the first is illustrated in Fig 10a. Of course both these ways of carrying out the embodiment relating to the introduction of a notification controlling MO likewise can be applied if the notifications are generated in MO:s instead of in RO:s. MO in this figure relates to the MO_{control} as referred to above. When the notification controlling MO_{control} receives a CMIP operation, the MO instance opens up all RO:s specified by the CMIP operation.

In all the RO:s (RO A-RO D) the notification is turned on/off.

Alternatively the MO_{control} could go to the MO instances instead of directly to the RO. The MO_{control} can have flags stored as persistent data which e.g. is advantageous in case an operator wants to see what status the flags have.

A second way of carrying out an embodiment based on using a notification controlling managed object MO_{control} is schematically illustrated in Fig 10b. When the MO_{control} receives a CMIP operation, the MO_{control} stores the CMIP request. Each time an RO notification could be sent out the RO checks if the RO (any of ROA-ROB) is allowed to send an RO notification or not. This gives a fast way of changing between permission/no permission of sending out a notification.

If many instances exist, quite an amount of memory will be needed for storing all the flags for all the MO instances. This solution is advantageous if a notification can be turned on/off per MO class.

The invention is not limited to the illustrated embodiments but can be varied in a number of ways within the scope of the claims.

## Claims

1. An arrangement comprising at least one managed system which is managed by at least one managing system and wherein the managed system comprises a number of managed objects (MO) representing a number of resources or resource objects (RO) which may be monitored and/or controlled by the managing system(s) and wherein communication between the managed system and the managing system(s) comprises transmission of event reports from event forwarding discriminator means (EFD;LDG) of the managed system to the managing system(s) resulting from notifications generated and emitted within the managed system, wherein notifications are generated in managed objects (MO) and/or in resource objects,
**characterized in**
**that** the arrangement comprises notification controlling means for selectively controlling the generation and/or distribution of notifications internally within the managed system, and in that the notification controlling means prevents notifications which are not to be communicated to the managing system in the form of event reports from being generated and/or emitted by the managed object (MO) and/or the resource object (RO) respectively to the event forwarding discriminator means (EFD/LOG).

2. Arrangement according to claim 1,
**characterized in,**
**that** the notification controlling means are operator controlled.

3. Arrangement according to claim 1 or 2,
**characterized in,**
**that** the notification controlling means provides for controlling which category etc. of notifications that are to be emitted under given conditions etc.

4. Arrangement according to any one of the preceding claims,
**characterized in,**
**that** the notification controlling means comprises an additional attribute through which at least a number of notifications relating to said attribute can be controlled e.g. if they are to be emitted or not from the managed object (MO) or the resource object (RO).

5. Arrangement according to claim 4,
**characterized in,**
**that** a package comprises the additional attribute, e.g. a notification stop package of the managed object.

6. Arrangement according to any one of claims 4 or 5,
**characterized in,**
**that** the additional attribute type (ASN.1) is defined according to the GDMO specifications and in that it comprises a number of object identifying means (OID) identifying notifications not to be emitted.

7. Arrangement according to any one of claims 4-6,
**characterized in,**
**that** the notification stop package is a conditional package of a managed object.

8. Arrangement according to any one of claims 4-6,
**characterized in,**
**that** the notification stop package is not a conditional package of a managed object.

9. Arrangement according to any one of claims 4-8,
**characterized in,**
**that** the attributes are value changed notifications relating to a changing value.

10. Arrangement according to any one of claims 4-9,
**characterized in,**
**that** notification packages are optional upon the design of the arrangement.

11. Arrangement according to any one of claims 4-10,
**characterized in,**
**that** attributes of a managed object are stored and/or calculated.

12. Arrangement according to any one of claims 4-11,
**characterized in,**
**that** notifications are turned on/off per attribute.

13. Arrangement according to any one of claims 1-3,
**characterized in,**
**that** the notification controlling means comprises an action added for each of at least a number of managed objects.

14. Arrangement according to claim 13,
**characterized in,**
**that** when the action is called, a flag is turned on/off in a managed object (MO) or a resource object (RO), the managed object (MO) or resource object (RO) is prohibited/allowed to send out a notification.

15. Arrangement according to any one of claims 1-3,
**characterized in,**
**that** the notification controlling means comprises a notification controlling managed object (MO)_{control} comprising an attribute/action for turning on/off a notification (MO;RO).

16. Arrangement according to any one of the preceding claims,
**characterized in,**
**that** the resources or the resource objects (RO) are physical and/or logical and/or functional.

17. Arrangement according to any one of the preceding claims,
**characterized in,**
**that** the managed system comprises one processor and in that all the managed objects (MO) are placed within one and the same process.

18. Arrangement according to claim 17,
**characterized in,**
**that** the managed objects (MO) are located in different processes in one and the same processor.

19. Arrangement according to any one of claims 1-16,
**characterized in,**
**that** the managed system comprises a processing arrangement comprising a number of processors which are interconnected via interprocessor communication means and in that the managed objects are located in different processors.

20. A telecommunication system comprising one or more operations systems (OS) managing a number of network elements (NE) comprising a number of managed objects (MO) representing a number of resources or resource objects (RO) and an interface (Q3) comprising a communication protocol between the operations system (OS) and the managed object(s) (MO) in which further a function comprising sending of notifications resulting in sending event reports from event forwarding discriminator means (EFD;LOG) of the network element(s) (NE) to the operations system (OS) is implemented,
**characterized in,**
**that** the managed system comprises notification controlling means for selectively controlling the generation and/or distribution of notifications from the managed objects (MO) or the resource objects (RO) within the network element thus controlling the load generated within the network element (NE) and in that the notification controlling means prevents notifications which are not to be communicated to the managing system in the form of event reports from being generated and/or emitted by the managed object (MO) and/or the resource object (RO) respectively to the event forwarding discriminator means (EFD/LOG).

21. A system according to claim 20 wherein data of the managed objects (MO) is specified as attributes,
**characterized in,**
**that** the notification controlling means comprises an additional attribute and in that the sending of notifications is controlled per attribute by said additional attribute.

22. A system according to claim 20,
**characterized in,**
**that** the notification controlling means comprises an additional Action per managed object and when the action is called, a flag is turned on/off in a managed object (MO) or in a resource object (RO) prohibiting/allowing the sending out of a notification.

23. A system according to claim 20,
**characterized in,**
**that** the notification controlling means comprises a notification controlling managed object MO_{control} comprising an attribute/action turning on/off notifications.

24. A telecommunications system according to any one of claims 20-23,
**characterized in,**
**that** the managed system(s) comprise(s) distributed processors.

25. A method for controlling the distribution of notifications relating to events in resources or resource objects represented by managed objects in a managed system managed by at least one managing system, wherein communication between the managed system and the managing system(s) comprises transmission of event report(s) from event forwarding discriminator means (EFD;LDG) the managed system to the managing system(s) resulting from notifications generated and emitted within the managed system,
**characterized in,**
**that** it comprises the steps of:
- defining of an additional attribute or action per managed object or a notification controlling managed object forming notification controlling means,
- via said notification controlling means selectively controlling the generation and/or distribution of the notifications by managed objects or resource objects per attribute/action or notification controlling managed object such that the generation/distribution of notifications internally within the managed system is controlled and in that the notification controlling means prevents notifications which are not to be communicated to the managing system in the form of event reports from being generated and/or emitted by the managed object (MO) and/or the resource object (RO) respectively to the event forwarding discriminator means (EFD/LOG).

## Patentansprüche

1. Eine Anordnung mit mindestens einem gesteuerten System, das durch mindestens ein steuerndes System gesteuert wird, und wobei das gesteuerte System eine Anzahl von gesteuerten Objekten (MO) umfasst, die eine Anzahl von Ressourcen oder Ressourceobjekten (RO) darstellen, die durch das steuernde System (Systeme) überwacht und/oder gesteuert werden können, und wobei eine Kommunikation zwischen dem gesteuerten System und dem steuernden System (den steuernden Systemen) eine Übertragung von Ereignisberichten von einer Ereignisweiterleitungs-Diskriminatoreinrichtung (EFD/LDG) des gesteuerten Systems zu dem steuernden System (den steuernden Systemen), die sich aus Notifikationen ergeben, die innerhalb des gesteuerten Systems erzeugt und emittiert werden, wobei Notifikationen in gesteuerten Objekten (MO) und/oder in Ressourceobjekten erzeugt werden,
**dadurch gekennzeichnet, dass**
die Anordnung eine Notifikationssteuereinrichtung umfasst zum wahlweisen Steuern der Erzeugung und/oder Verteilung von Notifikationen intern im gesteuerten System, und dass die Notifikationssteuereinrichtung verhindert, dass Notifikationen, die nicht in der Form von Ereignisberichten zu dem steuernden System zu kommunizieren sind, durch das gesteuerte Objekt (MO) und/oder das Ressourceobjekt (RO) erzeugt werden und/oder jeweilig zu der Ereignisweiterleitungs-Diskriminatoreinrichtung (EFD/LOG) zu emittiert werden.

2. Anordnung nach Anspruch 1,
**dadurch gekennzeichnet, dass**
die Notifikationssteuereinrichtung betreibergesteuert ist.

3. Anordnung nach Anspruch 1 oder 2,
**dadurch gekennzeichnet, dass**
die Notifikationssteuereinrichtung einer Steuerung hinsichtlich einer Kategorie, etc., von Notifikationen bereitstellt, die unter gegebenen Bedingungen, etc. zu emittieren sind.

4. Anordnung nach einem der vorhergehenden Ansprüche,
**dadurch gekennzeichnet, dass**
die Notifikationssteuereinrichtung ein zusätzliches Attribut umfasst, mittels dem mindestens eine Anzahl von Notifikationen bezüglich dieses Attributs gesteuert werden kann, z.B. ob sie von dem gesteuerten Objekt (MO) oder dem Ressourceobjekt (RO) zu emittieren sind oder nicht.

5. Anordnung nach Anspruch 4,
**dadurch gekennzeichnet, dass**
ein Paket das zusätzliche Attribute umfasst, z.B. ein Notifikationsstopp-Paket des gesteuerten Objekts.

6. Anordnung nach einem der Ansprüche 4 oder 5,
**dadurch gekennzeichnet, dass**
der zusätzliche Attributtyp (ASN.1 in Übereinstimmung mit den GDMO Spezifikationen definiert ist, und dass er eine Anzahl von Objektidentifizierungseinrichtungen (OID) umfasst, die Notifikationen identifizieren, die nicht zu emittieren sind.

7. Anordnung nach einem der Ansprüche 4-6,
**dadurch gekennzeichnet, dass**
das Notifikationsstopp-Paket ein bedingungsabhängiges Paket eines gesteuerten Objekts ist.

8. Anordnung nach einem der Ansprüche 4-6,
**dadurch gekennzeichnet, dass**
das Notifikationsstopp-Paket kein bedingungsabhängiges Paket eines gesteuerten Objekts ist.

9. Anordnung nach einem der Ansprüche 4-8,
**dadurch gekennzeichnet, dass**
die Attribute wertveränderte Notifikationen bezüglich eines Veränderungswertes sind.

10. Anordnung nach einem der Ansprüche 4-9,
**dadurch gekennzeichnet, dass**
Notifikationspakete bei der Entwicklung der Anordnung optional sind.

11. Anordnung nach einem der Ansprüche 4-10,
**dadurch gekennzeichnet, dass**
Attribute eines gesteuerten Objekts gespeichert und/oder berechnet werden.

12. Anordnung nach einem der Ansprüche 4-11,
**dadurch gekennzeichnet, dass**
Notifikationen pro Attribut an-/ausgeschaltet werden.

13. Anordnungen nach einem der Ansprüche 1-3,
**dadurch gekennzeichnet, dass**
die Notifikationssteuereinrichtung eine Aktion umfasst, hinzugefügt für jedes von mindestens einer Anzahl von gesteuerten Objekten.

14. Anordnung nach Anspruch 13,
**dadurch gekennzeichnet, dass**
dann, wenn die Aktion aufgerufen wird, ein Flag an/in einem gesteuerten Objekt (MO) oder einem Ressourceobjekt (RO) an-/ausgeschaltet wird, wobei es dem gesteuerten Objekt (MO) oder Ressourceobjekt (RO) verboten/erlaubt
ist, eine Notifikation auszusenden.

15. Anordnung nach einem der Ansprüche 1-3,
**dadurch gekennzeichnet, dass**
die Notifikationssteuereinrichtung ein notifikationssteuerndes gesteuertes Objekt (MO_{control}) umfasst, mit einem/einer Attribut/Aktion zum an/ausschalten einer Notifikation (MO; RO).

16. Anordnung nach einem der vorhergehenden Ansprüche,
**dadurch gekennzeichnet, dass**
die Ressourcen oder die Ressourceobjekte (RO) physisch und/oder logisch und/oder funktional sind.

17. Anordnung nach einem der vorhergehenden Ansprüche,
**dadurch gekennzeichnet, dass**
das gesteuerte System einen Prozessor umfasst, und dass alle gesteuerten Objekte (MO) innerhalb dem einem und dem selben Prozess angeordnet sind.

18. Anordnung nach Anspruch 17,
**dadurch gekennzeichnet, dass**
die gesteuerten Objekte (MO) in unterschiedlichen Prozessen in ein und dem selben Prozessor angeordnet sind.

19. Anordnung nach einem der Ansprüche 1-16,
**dadurch gekennzeichnet, dass**
das gesteuerte System eine Verarbeitungsanordnung umfasst, mit einer Anzahl von Prozessoren, die über eine Zwischenprozessorkommunikationseinrichtung verbunden sind, und dass die gesteuerten Objekte in unterschiedlichen Prozessoren angeordnet sind.

20. Ein Telekommunikationssystem mit einem oder mehreren Betriebssystemen (OS), die eine Anzahl von Netzelementen (NE) steuern, mit einer Anzahl von gesteuerten Objekten (MO), die eine Anzahl von Ressourcen oder Ressourceobjekten (RO) darstellen, und einer Schnittstelle (Q3) mit einem Kommunikationsprotokoll zwischen den Betriebssystemen (OS) und dem gesteuerten Objekt (den gesteuerten Objekten) (MO), wobei weiter eine Funktion implementiert ist, die ein Senden von Notifikationen umfasst, was ein Senden von Ereignisberichten von Ereignisweiterleitungs-Diskriminatoreinrichtungen (EFD;LOG) des Netzelements (der Netzelemente) (NE) zu dem Betriebssystem (OS) ergibt,
**dadurch gekennzeichnet, dass**
das gesteuerte System eine Notifikationssteuerungseinrichtung umfasst zum wahlweisen Steuern der Erzeugung und/oder Verteilung von Notifikationen von den gesteuerten Objekten (MO) oder den Ressourceobjekten (RO) innerhalb des Netzelements, wodurch die innerhalb des Netzelements (NE) erzeugte Last gesteuert wird, und dass die Notifikationssteuereinrichtung verhindert, dass Notifikationen, die nicht zum steuernden System in der Form von Ereignisberichten zu kommunizieren sind, erzeugt werden und/oder durch das gesteuerte Objekt (MO) und/oder das Ressourceobjekt (RO) jeweilig zu der Ereignisweiterleitungsunterscheidungseinrichtung (EFD/LOG) emittiert werden.

21. Ein System nach Anspruch 20, wobei Daten der gesteuerten Objekte (MO) als Attribute bestimmt sind,
**dadurch gekennzeichnet, dass**
die Notifikationssteuereinrichtung ein zusätzliches Attribut umfasst, und dass die Aussendung von Notifikationen pro Attribut durch das zusätzliche Attribut gesteuert wird.

22. Ein System nach Anspruch 20,
**dadurch gekennzeichnet, dass**
die Notifikationssteuereinrichtung eine zusätzliche Aktion pro gesteuertes Objekt umfasst, und, wenn die Aktion aufgerufen wird, ein Flag in einem gesteuerten Objekt (MO) oder einem Ressourcenobjekt (RO) an/ausgeschaltet wird, was das Aussenden einer Notifikation verhindert/erlaubt.

23. Ein System nach Anspruch 20,
**dadurch gekennzeichnet, dass**
die Notifikationssteuereinrichtung ein notifikationssteuerndes steuerndes Objekt (MO_{control}) umfasst mit einem/einer Attribut/Aktion zum An/Ausschalten von Notifikationen.

24. Ein Telekommunikationssystem nach einem der Ansprüche 20-23, **dadurch gekennzeichnet, dass** das gesteuerte System (die gesteuerten Systeme) verteilte Prozessoren umfasst/umfassen.

25. Ein Verfahren zum Steuern der Verteilung von Notifikationen bezüglich Ereignissen in Ressourcen oder Ressourceobjekten, repräsentiert durch gesteuerte Objekte in einem gesteuerten System, das durch mindestens ein steuerndes System gesteuert wird, wobei eine Kommunikation zwischen dem gesteuerten System und dem steuernden System (den steuernden Systemen) eine Übertragung von einem Ereignisbericht (Ereignisberichten) von einer Ereignisweiterleitungs-Diskriminatoreinrichtung (EFD;LDG) vom gesteuerten System zum steuernden System (den steuernden Systemen) umfasst, die sich aus innerhalb des gesteuerten Systems erzeugten und emittierten Notifikationen ergibt/ergeben,
**dadurch gekennzeichnet, dass** es die Schritte umfasst:
- Definieren eines zusätzlichen Attributs oder Aktion pro gesteuertes Objekt, oder eines notifikationssteuernden gesteuerten Objekts, das eine Notifikationssteuereinrichtung bildet,
- selektives Steuern, über die Notifikationssteuerungseinrichtung, der Erzeugung und/oder Verteilung der Notifikationen durch gesteuerte Objekte oder Ressourceobjekte pro Attribut/Aktion oder notifikationssteuerndem gesteuerten Objekt, so dass die Erzeugung/Verteilung von Notifikationen intern in dem gesteuerten System gesteuert wird, und dass die Notifikationssteuerungseinrichtung verhindert, dass Notifikationen, die nicht zu dem steuernden System in der Form von Ereignisberichten zu kommunizieren sind, erzeugt werden und/oder durch das gesteuerte Objekt (MO) und/oder das Ressourcenobjekt (RO) jeweilig zu der Weiterleitungsunterscheidungseinrichtung (EFD/LOG) emittiert werden.

## Revendications

1. Agencement comprenant au moins un système géré qui est géré par au moins un système gestionnaire et dans lequel le système géré comprend un certain nombre d'objets gérés (MO) représentant un certain nombre de ressources ou d'objets de ressources (RO) qui peuvent être surveillés et/ou commandés par le, ou les système(s) gestionnaire(s), et dans lequel la communication entre le système géré et le, ou les, système(s) gestionnaire(s) comprend l'émission de rapports d'événement provenant d'un moyen discriminateur (EFD ; LDG) d'acheminement d'événements du système géré au(x) système(s) gestionnaire(s) résultant de notifications engendrées et émises à l'intérieur du système géré, dans lequel les notifications sont engendrées dans des objets gérés (MO) et/ou dans des objets de ressources,
**caractérisé :**
**en ce que** l'agencement comprend un moyen de commande de notifications destiné à commander sélectivement la production et/ou la distribution de notifications de manière interne à l'intérieur du système géré, et en ce que le moyen de commande de notifications empêche les notifications, qui n'ont pas à être communiquées au système gestionnaire sous la forme de rapports d'événement, d'être produites et/ou émises par l'objet géré (MO) et/ou par l'objet de ressources (RO), respectivement, vers le moyen discriminateur (EFD/LOG) d'acheminement d'événements.

2. Agencement selon la revendication 1,
**caractérisé en ce que** le moyen de commande de notifications est commandé par opérateur.

3. Agencement selon la revendication 1 ou 2,
**caractérisé en ce que** le moyen de commande de notifications réalise la commande de la catégorie, etc., de notifications qui doit être émise sous des conditions données, etc.

4. Agencement selon l'une quelconque des revendications précédentes,
**caractérisé en ce que** le moyen de commande de notifications comprend un attribut additionnel au moyen duquel au moins un certain nombre de notifications se rapportant audit attribut peuvent être commandées, par exemple si elles doivent être émises ou non depuis l'objet géré (MO) ou l'objet de ressources (RO).

5. Agencement selon la revendication 4,
**caractérisé en ce qu'**un progiciel comprend l'attribut additionnel, par exemple un progiciel d'arrêt de notifications de l'objet géré.

6. Agencement selon l'une quelconque des revendications 4 ou 5,
**caractérisé en ce que** le type (ASN.1) d'attribut additionnel est défini d'après les spécifications du GDMO (guide pour la définition des objets gérés) et **en ce qu'**il comprend un certain nombre de moyens (OID) d'identification d'objet identifiant des notifications qui ne doivent pas être émises.

7. Agencement selon l'une quelconque des revendications 4 à 6,
**caractérisé en ce que** le progiciel d'arrêt de notifications est un progiciel conditionnel d'un objet géré.

8. Agencement selon l'une quelconque des revendications 4 à 6,
**caractérisé en ce que** le progiciel d'arrêt de notifications n'est pas un progiciel conditionnel d'un objet géré.

9. Agencement selon l'une quelconque des revendications 4 à 8,
**caractérisé en ce que** les attributs sont des notifications dont les valeurs ont changé se rapportant à une valeur changeante.

10. Agencement selon l'une quelconque des revendications 4 à 9,
**caractérisé en ce que** les progiciels de notification sont facultatifs lors de la conception de l'agencement.

11. Agencement selon l'une quelconque des revendications 4 à 10,
**caractérisé en ce que** les attributs d'un objet géré sont mémorisés et/ou calculés.

12. Agencement selon l'une quelconque des revendications 4 à 11,
**caractérisé en ce que** les notifications sont activées/désactivées par attribut.

13. Agencement selon l'une quelconque des revendications 1 à 3,
**caractérisé en ce que** le moyen de commande de notification comprend une action ajoutée pour chacun d'au moins un certain nombre d'objets gérés.

14. Agencement selon la revendication 13,
**caractérisé en ce que** lorsque l'action est appelée, un indicateur est activé/désactivé dans un objet géré (MO) ou dans un objet de ressources (RO), on interdit/autorise l'objet géré (MO) ou l'objet de ressources (RO) à émettre une notification.

15. Agencement selon l'une quelconque des revendications 1 à 3,
**caractérisé en ce que** le moyen de commande de notification comprend un objet géré (MO)_{commande} de commande de notification comprenant un attribut/action destiné à activer/désactiver une notification (MO ; RO).

16. Agencement selon l'une quelconque des revendications précédentes,
**caractérisé en ce que** les ressources des objets de ressources (RO) sont physiques et/ou logiques et/ou fonctionnelles.

17. Agencement selon l'une quelconque des revendications précédentes,
**caractérisé en ce que** le système géré comprend un seul processeur et **en ce que** tous les objets gérés (MO) sont placés à l'intérieur d'un seul et même traitement.

18. Agencement selon la revendication 17,
**caractérisé en ce que** les objets gérés (MO) sont placés dans des traitements différents dans un seul et même processeur.

19. Agencement selon l'une quelconque des revendications 1 à 16,
**caractérisé en ce que** le système géré comprend un agencement de traitement comprenant un certain nombre de processeurs qui sont interconnectés par l'intermédiaire d'un moyen de communication entre processeurs et **en ce que** les objets gérés sont situés dans des processeurs différents.

20. Système de télécommunications comprenant un ou plusieurs systèmes d'exploitation (OS) gérant un certain nombre d'éléments (NE) de réseau comprenant un certain nombre d'objets gérés (MO) représentant un certain nombre de ressources ou d'objets de ressources (RO) et une interface (Q3) comprenant un protocole de communication entre le système d'exploitation (OS) et le, ou les, objet(s) géré(s) (MO), dans lequel est implantée en outre une fonction comprenant l'envoi de notifications avec pour résultat l'envoi de rapports d'événement d'un moyen discriminateur (EFD ; LOG) d'acheminement d'événements du, ou des, élément(s) (NE) de réseau au système d'exploitation (OS),
**caractérisé en ce que** le système géré comprend un moyen de commande de notifications destiné à commander sélectivement la production et/ou la distribution de notifications depuis les objets gérés (MO) ou les objets de ressources (RO) à l'intérieur de l'élément de réseau en commandant ainsi la charge engendrée à l'intérieur de l'élément de réseau (NE), et **en ce que** le moyen de commande de notifications empêche les notifications, qui n'ont pas à être communiquées au système gestionnaire sous la forme de rapports d'événement, d'être produites et/ou émises par l'objet géré (MO) et/ou par l'objet de ressources (RO), respectivement, vers le moyen discriminateur (EFD/LOG) d'acheminement d'événements.

21. Système selon la revendication 20, dans lequel des données des objets gérés (MO) sont spécifiées comme des attributs,
**caractérisé en ce que** le moyen de commande de notification comprend un attribut additionnel et **en ce que** l'envoi de notifications est commandé par attribut par ledit attribut additionnel.

22. Système selon la revendication 20,
**caractérisé en ce que** le moyen de commande de notifications comprend une action additionnelle par objet géré et **en ce que** lorsque l'action est appelée, un indicateur est activé/désactivé dans un objet géré (MO) ou dans un objet de ressources (RO) en interdisant/autorisant l'envoi d'une notification.

23. Système selon la revendication 20,
**caractérisé en ce que** le moyen de commande de notification comprend un objet géré MO_{commande} de commande de notification comprenant un attribut/action activant/désactivant les notifications.

24. Système de télécommunications selon l'une quelconque des revendications 20 à 23,
**caractérisé en ce que** le, ou les, système(s) géré(s) comprend (comprennent) des processeurs répartis.

25. Procédé de commande de la distribution de notifications se rapportant à des événements dans des ressources ou des objets de ressources représentés par les objets gérés dans un système géré, géré par au moins un système gestionnaire, dans lequel la communication entre le système géré et le, ou les, système(s) gestionnaire(s) comprend l'émission d'un, ou de, rapport(s) d'événement(s) provenant d'un moyen discriminateur (EFD ; LDG) d'acheminement d'événements du système géré au(x) système(s) gestionnaire(s) résultant de notifications engendrées et émises à l'intérieur du système géré,
**caractérisé en ce qu'**il comprend les étapes consistant :
à définir un attribut additionnel ou une action par objet géré ou un objet géré de commande de notification formant moyen de commande de notification ;
par l'intermédiaire dudit moyen de commande de notification, à commander sélectivement la production et/ou la distribution des notifications par des objets gérés ou des objets de ressources par attribut/action ou par objet géré de commande de notification, de façon à commander la production/distribution de notifications de manière interne à l'intérieur du système géré, et **en ce que** le moyen de commande de notification empêche les notifications qui n'ont pas à être communiquées au système gestionnaire sous la forme de rapports d'événement d'être engendrées et/ou émises par l'objet géré (MO) et/ou par l'objet de ressources (RO), respectivement, vers le moyen discriminateur (EFD/LOG) d'acheminement d'événements.
